(19) Europäisches Patentamt
European Patent Office
Office européen des brevets

(11) **EP 3 910 553 A2**

(12) **EUROPEAN PATENT APPLICATION**

(43) Date of publication:
**17.11.2021 Bulletin 2021/46**

(51) Int Cl.:
***G06K 9/62*** (2006.01)

(21) Application number: **21195780.8**

(22) Date of filing: **09.09.2021**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **21.01.2021 CN 202110082319**

(71) Applicant: **Beijing Baidu Netcom Science And Technology Co., Ltd.**
**Beijing 100085 (CN)**

(72) Inventors:
• **ZOU, Zhikang**
**Beijing, 100085 (CN)**
• **YE, Xiaoqing**
**Beijing, 100085 (CN)**
• **SUN, Hao**
**Beijing, 100085 (CN)**

(74) Representative: **Isarpatent**
**Patent- und Rechtsanwälte Barth**
**Charles Hassa Peckmann & Partner mbB**
**Friedrichstrasse 31**
**80801 München (DE)**

(54) **IMAGE PROCESSING METHOD, TRAINING METHOD FOR A NEURAL NETWORK, DEVICE AND MEDIUM**

(57) The present disclosure provides an image processing method, a training method for a neural network, a device, and a medium, relates to the technical field of artificial intelligence, especially relates to deep learning and computer vision. The implementation is: inputting a source domain image and a target domain image into a matching feature extraction network to extract a matching feature of the source domain image and a matching feature of the target domain image, wherein the matching feature of the source domain image and the matching feature of target domain image are mutually matching features in the source domain image and the target domain image, the source domain image is a simulated image generated through rendering based on predetermined object pose parameters, and the target domain image is a real image that is actually shot and applicable to learning of object pose estimation; and providing the matching feature of the source domain image for training of the object pose estimation.

*Fig.2*

**Description**

Technical Field

The present disclosure relates to the technical field of artificial intelligence, especially relates to deep learning and computer vision, and in particular to an image processing method, a training method for a neural network, an electronic device and a computer-readable storage medium.

Background

Artificial intelligence is a subject on making a computer simulate some thinking processes and intelligent behaviors (such as learning, reasoning, thinking, and planning) of a human, and involves both hardware-level technologies and software-level technologies. Artificial intelligence hardware technologies generally include the fields such as sensors, dedicated artificial intelligence chips, cloud computing, distributed storage, and big data processing. Artificial intelligence software technologies mainly include the following several general directions: computer vision technologies, speech recognition technologies, natural language processing technologies, machine learning/deep learning, big data processing technologies, and knowledge graph technologies.

At present, object pose estimation may be performed by using various strategies, such as direct detection of 2D keypoint, prediction of pixel-level heatmap, or vector field prediction of pixel-level direction. The precision of object pose estimation based on deep learning depends on the accuracy and richness of training data.

However, for real images, data annotation requires much time and effort, and manual annotation often cannot ensure the accuracy of annotation. Although simulated images include a large number of images with accurate annotations, the simulated images are significantly different from the real images, and therefore cannot be directly used to train a network for object pose estimation.

The methods described in this section are not necessarily methods that have been previously conceived or employed. It should not be assumed that any of the methods described in this section are considered to be the prior art just because they are included in this section, unless otherwise indicated expressly. Similarly, the problem mentioned in this section should not be considered to be universally recognized in any prior art, unless otherwise indicated expressly.

Summary

The present disclosure provides an image processing method, a training method for a neural network, a device and a medium.

According to an aspect of the present disclosure, there is provided a computer-implemented image processing method, comprising: inputting a source domain image and a target domain image into a matching feature extraction network to extract a matching feature of the source domain image and a matching feature of the target domain image, wherein the matching feature of the source domain image and the matching feature of target domain image are mutually matching features in the source domain image and the target domain image, the source domain image is a simulated image generated through rendering based on predetermined object pose parameters, and the target domain image is a real image that is actually shot and applicable to learning of object pose estimation; and providing the matching feature of the source domain image for training of the object pose estimation.

According to another aspect of the present disclosure, there is provided a computer-implemented training method for a neural network, wherein the neural network comprises a matching feature extraction network and a discriminator network, and the training method comprises steps of: inputting a source domain image sample and a target domain image sample into the matching feature extraction network to extract a matching feature of the source domain image sample and a matching feature of the target domain image sample, wherein the matching feature of the source domain image sample and the matching feature of target domain image sample are mutually matching features in the source domain image sample and the target domain image sample, the source domain image is a simulated image generated through rendering based on predetermined object pose parameters, and the target domain image is a real image that is actually shot and applicable to learning of object pose estimation; inputting the matching feature of the source domain image sample into the discriminator network to calculate a discrimination result of the matching feature of the source domain image sample, and inputting the matching feature of the target domain image sample into the discriminator network to calculate a discrimination result of the matching feature of the target domain image sample; calculating a first loss value based on the discrimination result of the matching feature of the target domain image sample, and adjusting parameters of the matching feature extraction network based on the first loss value; calculating a second loss value based on the discrimination result of the matching feature of the source domain image sample and the discrimination result of the matching feature of the target domain image sample, and adjusting parameters of the discriminator network based on the second loss value; in response to a determination that the first loss value and the second loss value meet a preset condition, ending the training method; in response to a determination that the first loss value and the second loss value do not meet the preset condition, obtaining a next source domain image sample and a next target domain image sample, and repeating the steps.

According to another aspect of the present disclosure, there is provided an electronic device, comprising: at least one processor; and a memory communicatively connected to the at least one processor, wherein the memory stores instructions executable by the at least one processor, and the instructions, when executed by the at least one processor, enable the at least one processor to perform the foregoing image processing method and/or the forgoing training method.

According to another aspect of the present disclosure, there is further provided a computer-readable storage medium storing computer instructions, wherein the computer instructions are configured to cause a computer to perform the foregoing image processing method and/or the foregoing training method.

According to one or more embodiments of the present disclosure, data that can be used for training of the object pose estimation can be mined from the simulated image, thereby further improving the accuracy of the object pose estimation.

It should be understood that the content described in this section is not intended to identify critical or important features of the embodiments of the present disclosure, and is not used to limit the scope of the present disclosure. Other features of the present disclosure will be easily understood through the following specification.

Brief Description of the Drawings

The drawings exemplarily show embodiments and form a part of the specification, and are used to explain exemplary implementations of the embodiments together with a written description of the specification. The embodiments shown are merely for illustrative purposes and do not limit the scope of the claims. Throughout the drawings, identical reference numerals denote similar but not necessarily identical elements.

Fig. 1 is a schematic diagram of an exemplary system in which various methods described herein can be implemented according to an embodiment of the present disclosure;
Fig. 2 is a flowchart of an image processing method according to an embodiment of the present disclosure;
Fig. 3 is a flowchart of an example operation of extracting a matching feature of a source domain image and a matching feature of a target domain image in the process of Fig. 2 according to an embodiment of the present disclosure;
Fig. 4 is a structural diagram of a matching feature extraction network according to an embodiment of the present disclosure;
Fig. 5 is a flowchart of an example operation of extracting a matching feature of a source domain image and a matching feature of a target domain image in the process of Fig. 3 according to an embodiment of the present disclosure;
Fig. 6 is a structural diagram of a matching feature recognition network in Fig. 4 according to an embodiment of the present disclosure;
Fig. 7 is a flowchart of a process of training a matching feature extraction network according to an embodiment of the present disclosure;
Fig. 8 is a schematic diagram of a process of training a matching feature extraction network according to an embodiment of the present disclosure;
Fig. 9 is a structural block diagram of an image processing apparatus according to an embodiment of the present disclosure;
Fig. 10 is a structural block diagram of a training apparatus for a neural network according to an embodiment of the present disclosure; and
Fig. 11 is a structural block diagram of an exemplary electronic device that can be used to implement an embodiment of the present disclosure.

Detailed Description of Embodiments

Exemplary embodiments of the present disclosure are described below with reference to the accompanying drawings, with various details of the embodiments of the present disclosure comprised to facilitate understanding, and should be considered as merely exemplary. Therefore, those of ordinary skill in the art should be aware that various changes and modifications may be made to the embodiments described herein, without departing from the scope of the present disclosure. Likewise, for clarity and simplicity, description of well-known functions and structures are omitted in the following description.

In the present disclosure, unless otherwise stated, the terms "first", "second", etc., used to describe various elements are not intended to limit the positional, temporal or importance relationship of these elements, but rather only to distinguish one component from another. In some examples, the first element and the second element may refer to the same instance of the element, and in some cases, based on contextual descriptions, the first element and the second element may also refer to different instances.

The terms used in the description of the various examples in the present disclosure are merely for the purpose of describing particular examples, and are not intended to be limiting. If the number of elements is not specifically defined, it may be one or more, unless otherwise expressly indicated in the context. Moreover, the term "and/or" used in the present disclosure encompasses any and all possible combinations of listed items.

In order to solve the problems in the prior art that annotation of real images is costly but inaccurate, and simulated images are relatively significantly different from the real images, the present disclosure provides an image processing method as described below, to train a network for object pose estimation by using simulated images.

The embodiments of the present disclosure will be described below in detail with reference to the accompanying drawings.

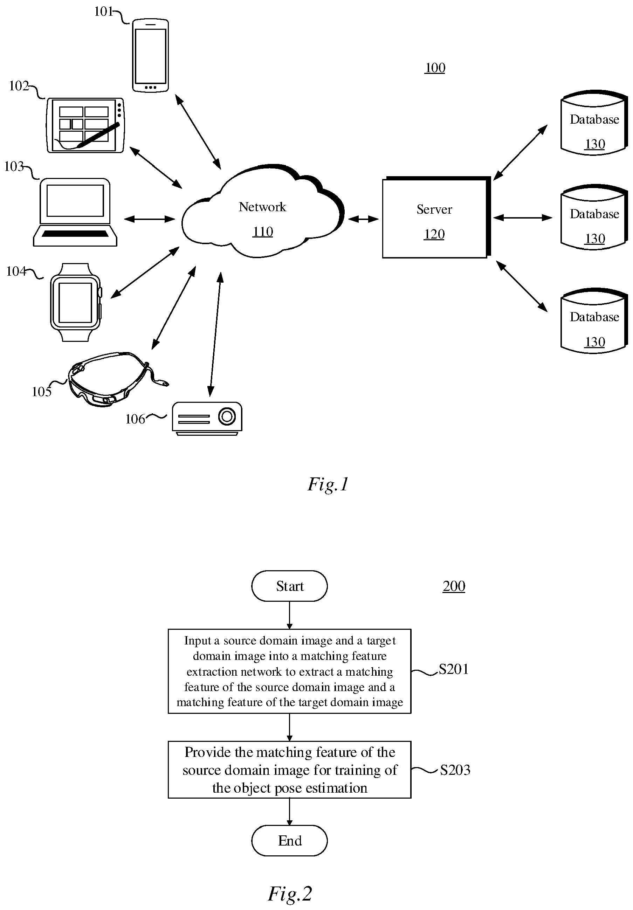

Fig. 1 is a schematic diagram of an exemplary system 100 in which various methods and apparatuses described herein can be implemented according to an embodiment of the present disclosure. Referring to Fig. 1, the system 100 comprises one or more client devices 101, 102, 103, 104, 105, and 106, a server 120, and one or more communication networks 110 that couple the one or more client devices to the server 120. The client devices 101, 102, 103, 104, 105, and 106 may be configured to execute one or more application programs.

In an embodiment of the present disclosure, the server 120 may run one or more services or software applications that enable an image processing method and/or a training method for a neural network to be performed. The image processing method may use a feature extraction network to mine data, which may be used to train a network for object pose estimation, from a simulated image, and the training method for a neural network may be used to train the feature extraction network. It will be understood that this is not limiting, and in some embodiments, the client devices 101, 102, 103, 104, 105, and 106 may have sufficient storage and computing resources so that they can also execute one or more services or software applications of the image processing object detection method and/or the training method.

In some embodiments, the server 120 may further provide other services or software applications that may comprise a non-virtual environment and a virtual environment. In some embodiments, these services may be provided as web-based services or cloud services, for example, provided to a user of the client device 101, 102, 103, 104, 105, and/or 106 in a software as a service (SaaS) model.

In the configuration shown in Fig. 1, the server 120 may comprise one or more components that implement functions performed by the server 120. These components may comprise software components, hardware components, or a combination thereof that can be executed by one or more processors. A user operating the client device 101, 102, 103, 104, 105, and/or 106 may sequentially use one or more client application programs to interact with the server 120, thereby utilizing the services provided by these components. It should be understood that various system configurations are possible, which may be different from the system 100. Therefore, Fig. 1 is an example of the system for implementing various methods described herein, and is not intended to be limiting.

The user may use the client devices 101, 102, 103, 104, 105, and/or 106 to perform object pose estimation, for example, based on a trained network for object pose estimation. The client device may provide an interface that enables the user of the client device to interact with the client device. The client device may also output information to the user via the interface. Although Fig. 1 depicts only six types of client devices, those skilled in the art will understand that any number of client devices are possible in the present disclosure.

The client device 101, 102, 103, 104, 105, and/or 106 may include various types of computer devices, such as a portable handheld device, a general-purpose computer (such as a personal computer and a laptop computer), a workstation computer, a wearable device, a gaming system, a thin client, various messaging devices, and a sensor or other sensing devices. These computer devices can run various types and versions of software application programs and operating systems, such as Microsoft Windows, Apple iOS, a UNIX-like operating system, and a Linux or Linux-like operating system (e.g., Google Chrome OS); or include various mobile operating systems, such as Microsoft Windows Mobile OS, iOS, Windows Phone, and Android. The portable handheld device may include a cellular phone, a smartphone, a tablet computer, a personal digital assistant (PDA), etc. The wearable device may include a head-mounted display and other devices. The gaming system may include various handheld gaming devices, Internet-enabled gaming devices, etc. The client device can execute various application programs, such as various Internet-related application programs, communication application programs (e.g., email application programs), and short message service (SMS) application programs, and can use various communication protocols.

The network 110 may be any type of network well known to those skilled in the art, and it may use any one of a plurality of available protocols (including but not limited to TCP/IP, SNA, IPX, etc.) to support data communication. Merely as an example, the one or more networks 110 may be a local area network (LAN), an Ethernet-based network, a token ring, a wide area network (WAN), the Internet, a virtual network, a virtual private network (VPN), an intranet, an extranet, a public switched telephone network (PSTN), an infrared network, a wireless network (such as Bluetooth or Wi-Fi), and/or any combination of these and/or other networks.

The server 120 may include one or more general-purpose computers, a dedicated server computer (e.g., a personal computer (PC) server, a UNIX server, or a mid-end server), a blade server, a mainframe computer, a server cluster, or any other suitable arrangement and/or combination. The server 120 may include one or more virtual machines running a virtual operating system, or other computing architectures relating to virtualization (e.g., one or more flexible pools of logical storage devices that can be virtualized to maintain virtual storage devices of a server). In various embodiments, the server 120 can run one or more services or software applications that provide functions described below.

A computing unit in the server 120 can run one or more operating systems including any of the above-mentioned operating systems and any commercially available server operating system. The server 120 can also run any one of various additional server application programs and/or middle-tier application programs, including an HTTP server, an FTP server, a CGI server, a JAVA server, a database server, etc.

In some implementations, the server 120 may comprise one or more application programs to analyze and merge data feeds and/or event updates received from users of the client devices 101, 102, 103, 104, 105, and 106. The server 120 may further include one or more application programs to display the data feeds and/or real-time events via one or more display devices of the client devices 101, 102, 103, 104, 105, and 106.

In some implementations, the server 120 may be a server in a distributed system, or a server combined with a blockchain. The server 120 may alternatively be a cloud server, or an intelligent cloud computing server or intelligent cloud host with artificial intelligence technologies. The cloud server is a host product in a cloud computing service system, to overcome the shortcomings of difficult management and weak service scalability in conventional physical host and virtual private server (VPS) services.

The system 100 may further comprise one or more databases 130. In some embodiments, these databases can be used to store data and other information. For example, one or more of the databases 130 can be used to store information such as an audio file and a video file. The data repository 130 may reside in various locations. For example, a data repository used by the server 120 may be locally in the server 120, or may be remote from the server 120 and may communicate with the server 120 via a network-based or dedicated connection. The data repository 130 may be of different types. In some embodiments, the data repository used by the server 120 may be a database, such as a relational database. One or more of these databases can store, update, and retrieve data from or to the database, in response to a command.

In some embodiments, one or more of the databases 130 may also be used by an application program to store application program data. The database used by the application program may be of different types, for example, may be a key-value repository, an object repository, or a regular repository backed by a file system.

The system 100 of Fig. 1 may be configured and operated in various manners, such that the various methods and apparatuses described according to the present disclosure can be applied.

In an exemplary embodiment of the present disclosure, there is provided an image processing method, comprising: inputting a source domain image and a target domain image into a matching feature extraction network to extract a matching feature of the source domain image and a matching feature of the target domain image, wherein the matching feature of the source domain image and the matching feature of target domain image are mutually matching features in the source domain image and the target domain image, the source domain image is a simulated image generated through rendering based on predetermined object pose parameters, and the target domain image is a real image that is actually shot and applicable to learning of object pose estimation; and providing the matching feature of the source domain image for training of the object pose estimation.

Fig. 2 is a flowchart of an image processing method 200 according to an embodiment of the present disclosure. In some embodiments, the method 200 may be performed at a server (for example, the server 120 shown in Fig. 1), that is, an execution body of steps of the method 200 may be the server 120 shown in Fig. 1. In some embodiments, the method 200 may be performed at a client device (for example, the client devices 101, 102, 103, 104, 105, and 106 shown in Fig. 1). In some embodiments, the method 200 may be performed by a combination of the client device (for example, the client devices 101, 102, 103, 104, 105, and 106) and the server (for example, the server 120). In the following, the server 120 is taken as an example of the execution body for detailed description of the steps of the method 200.

In step S201, a source domain image and a target domain image are input into a matching feature extraction network to extract a matching feature of the source domain image and a matching feature of the target domain image.

According to some embodiments, the source domain image is a simulated image generated through rendering based on predetermined object pose parameters. According to some embodiments, the predetermined object pose parameters comprise an offset amount and a rotation amount of an object. Because the source domain image is generated based on the predetermined object parameters, the source domain image has accurately annotated annotation information (that is, the object pose parameters).

According to some embodiments, a real image is an image that is actually shot and applicable to learning of object pose estimation. For example, the real image may comprise a plurality of objects arranged in a plurality of poses.

According to some embodiments, matching is performed on the source domain image and the target domain image to extract mutually matching features in the source domain image and the target domain image, wherein the matching feature of the source domain image and the matching feature of target domain image are mutually matching features in the source domain image and the target domain image, for example, relatively close features in the source domain image and the target domain image.

In step S203, the matching feature of the source domain image is provided for training of the object pose estimation.

According to some embodiments, the matching feature of the source domain image is used as training data of a network for object pose estimation.

In the image processing method provided in this embodiment of the present disclosure, the feature in the source domain image (that is, the simulated image) that matches the target domain image (that is, the real image) is extracted, and a distance between the simulated image and the real image can be shortened accordingly, such that the simulated image can be effectively used to train the network for object pose estimation to improve the precision of the object pose estimation.

According to some embodiments, the matching feature extraction network comprises a source domain feature extraction network, a target domain feature extraction network, and a matching feature recognition network, and the inputting the source domain image and the target domain image into the matching feature extraction network to extract the matching feature of the source domain image and the matching feature of the target domain image comprises: inputting the source domain image into the source domain feature extraction network to extract a source domain image feature; inputting the target domain image into the target domain feature extraction network to extract a target domain image feature; and inputting the source domain image feature and the target domain image feature into the matching feature recognition network to extract the matching feature of the source domain image and the matching feature of the target domain image, wherein the source domain feature extraction network and the target domain feature extraction network are the same in both structure and parameters, and the source domain image and the target domain image are the same in number of images.

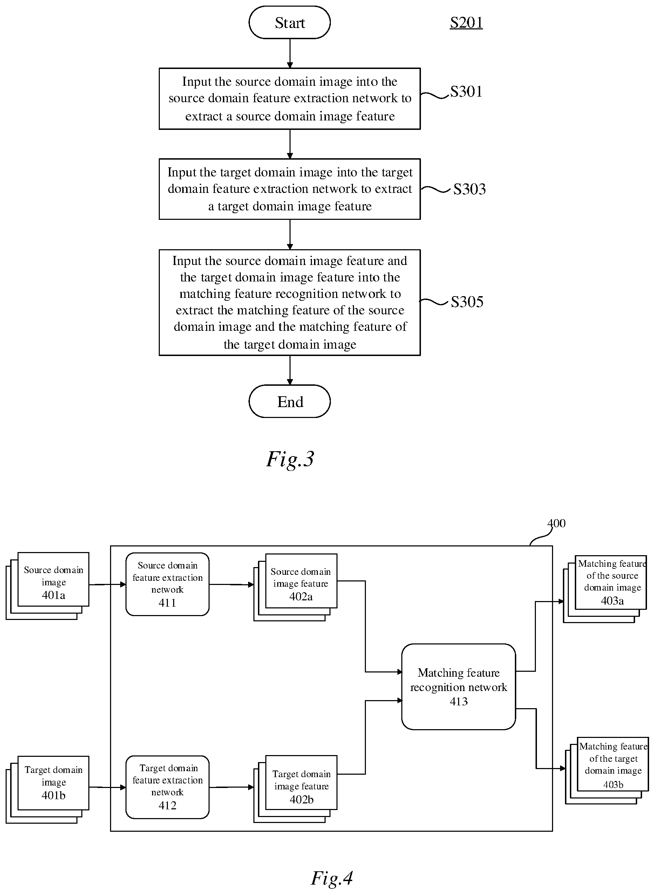

Fig. 3 is a flowchart of an example operation of extracting a matching feature of a source domain image and a matching feature of a target domain image (step S201) in the process of Fig. 2 according to an embodiment of the present disclosure.

In step S301, the source domain image is input into the source domain feature extraction network to extract the source domain image feature.

In step S303, the target domain image is input into the target domain feature extraction network to extract the target domain image feature.

According to some embodiments, the source domain image and the target domain image are the same in number of images. According to some embodiments, there are a plurality of source domain images and a plurality of target domain images. According to some other embodiments, there is one source domain image and one target domain image.

According to some embodiments, the source domain feature extraction network and the target domain feature extraction network are the same in both structure and parameters. Because the source domain feature extraction network and the target domain feature extraction network are the same in both structure and parameters, the same feature extraction process is performed on the source domain image and the target domain image. In addition, because the source domain feature extraction network and the target domain feature extraction network are the same in both structure and parameters, each image in the source domain image and the target domain image is the same in size, and each image in the source domain image and the target domain image is the same in number of pixels.

In step S305, the source domain image feature and the target domain image feature are input into the matching feature recognition network to extract the matching feature of the source domain image and the matching feature of the target domain image.

Fig. 4 is a structural diagram of a matching feature extraction network 400 according to an embodiment of the present disclosure. As shown in Fig. 4, the matching feature extraction network 400 comprises a source domain feature extraction network 411, a target domain feature extraction network 412, and a matching feature recognition network 413.

As described with reference to step S301, a source domain image 401a is input into the source domain feature extraction network 411 to extract a source domain image feature 402a. As described with reference to step S303, a target domain image 401b is input into the target domain feature extraction network 412 to extract a target domain image feature 402b.

According to some embodiments, the source domain feature extraction network 411 and the target domain feature extraction network 412 are the same in both structure and parameters.

As described with reference to step S305, the source domain image feature 402a and the target domain image feature 402b are input into the matching feature recognition network 413 to extract the matching feature of the source domain image 403a and the matching feature of the target domain image 403b.

According to some embodiments, the matching feature recognition network comprises a similarity evaluation network, and the inputting the source domain image feature and the target domain image feature into the matching feature recognition network to extract the matching feature of the source domain image and the matching feature of the target domain image comprises: performing channel stacking on the source domain image feature and the target domain image feature to obtain a comprehensive image feature; inputting the comprehensive image feature into the similarity evaluation network to obtain matching feature distribution of the source domain image and the target domain image; performing channel splitting on the matching feature distribution of the source domain image and the target domain image to obtain matching feature distribution of the source domain image and matching feature distribution of the target domain image; multiplying the matching feature distribution of the source domain image feature by the source domain image to obtain the matching feature of the source domain image; multiplying the matching feature distribution of the target domain image by the target domain image feature to obtain the matching feature of the target domain image.

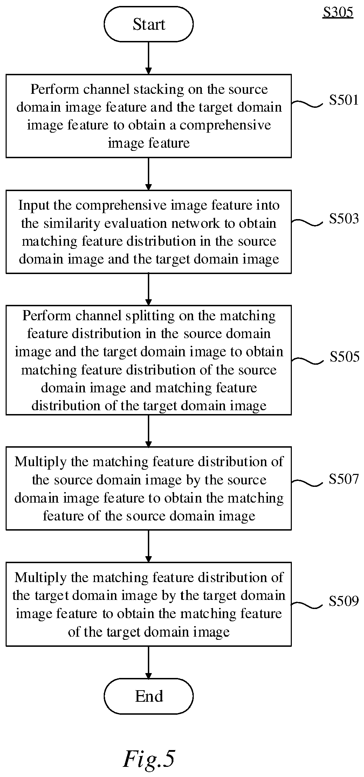

Fig. 5 is a flowchart of an example operation of extracting a matching feature of a source domain image and a matching feature of a target domain image (S305) in the process of Fig. 3 according to an embodiment of the present disclosure.

In step S501, channel stacking is performed on the source domain image feature and the target domain image feature to obtain a comprehensive image feature.

According to some embodiments, the performing channel stacking on the source domain image feature and the target domain image feature is: stacking the source domain image feature and the target domain image feature in a channel direction.

For example, when the size of the source domain image feature and the size of the target domain image feature each are N × H × W × C, wherein N is the number of images, C is the number of channels, H is the number of pixels in a height direction, and W is the number of pixels in a width direction, the size of the comprehensive image feature obtained through channel stacking on the source domain image feature and the target domain image feature is N × H × W × 2C, wherein data of the first C channels of the comprehensive image feature corresponds to the source domain image feature, and data of the second C channels of the comprehensive image feature corresponds to the target domain image feature.

In step S503, the comprehensive image feature is input to the similarity evaluation network to obtain matching feature distribution in the source domain image and the target domain image.

According to some embodiments, the similarity evaluation network calculates a similarity between a portion in the comprehensive image feature that corresponds to the source domain image feature and a portion in the comprehensive image feature that corresponds to the target domain image feature, so as to match the source domain image feature and the target domain image feature.

According to some embodiments, the comprehensive image feature and the matching feature distribution are the same in size. For example, when the size of the comprehensive image feature is N × H × W × 2C, the size of the matching feature distribution is N × H × W × 2C.

According to some embodiments, data of the first half of the channels of the matching feature distribution corresponds to the source domain image feature, and data of the second half of the channels of the matching feature distribution corresponds to the target domain image feature. For example, when the size of the matching feature distribution is N × H × W × 2C, data of the first C channels of the matching feature distribution corresponds to the source domain image feature, and data of the second C channels of the matching feature distribution corresponds to the target domain image feature.

In step S505, channel splitting is performed on the matching feature distribution in the source domain image and the target domain image to obtain matching feature distribution of the source domain image and matching feature distribution of the target domain image.

According to some embodiments, the performing channel splitting on the matching feature distribution in the source domain image and the target domain image comprises: splitting, in a channel direction, the matching feature in the source domain image and the target domain image into the matching feature distribution of the source domain image and the matching feature distribution of the target domain image.

For example, when the size of the comprehensive image feature is N × H × W × 2C, the data of the first C channels of the comprehensive image feature are split into the matching feature distribution of the source domain image, and the data of the second C channels of the comprehensive image feature are split into the matching feature distribution of the target domain image.

In step S507, the matching feature distribution of the source domain image is multiplied by the source domain image feature to obtain the matching feature of the source domain image.

In step S509, the matching feature distribution of the target domain image is multiplied by the target domain image feature to obtain the matching feature of the target domain image.

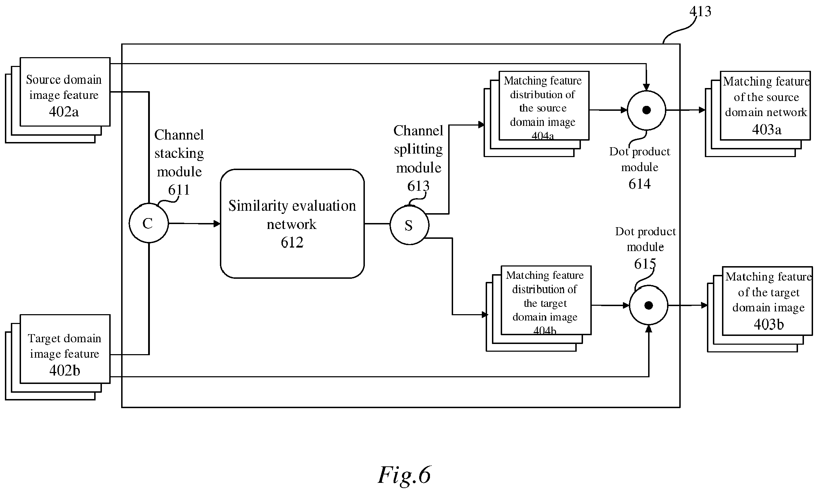

Fig. 6 is a structural diagram of a matching feature recognition network 413 in Fig. 4 according to an embodiment of the present disclosure. As shown in Fig. 6, the matching feature recognition network 413 comprises a channel stacking module 611, a similarity evaluation network 612, a channel splitting module 613, and dot product modules 614 and 615.

As described with reference to step S501, the source domain image feature 402a and the target domain image feature 402b are stacked at the channel stacking module 611 to obtain the comprehensive image feature.

As described with reference to step S503, the comprehensive image feature obtained through stacking is input into the similarity evaluation network 612 to obtain the matching feature distribution in the source domain image and the target domain image.

As described with reference to step S505, the matching feature distribution in the source domain image and the target domain image is split at the channel splitting module 613 to obtain the matching feature distribution of the source domain image 404a and the matching feature distribution of the target domain image 404b.

As described with reference to step S507, the matching feature distribution of the source domain image 404a is multiplied by the source domain image feature 402a at the dot product module 614 to obtain the matching feature of the source domain image 403a.

As described with reference to step S509, the matching feature distribution of the target domain image 404b is multiplied by the target domain image feature 402b at the dot product module 615 to obtain the matching feature of the target domain image 403b.

According to some embodiments, the matching feature extraction network is obtained through a training process comprising the following steps: inputting a source domain image sample and a target domain image sample into the matching feature extraction network to extract a matching feature of the source domain image sample and a matching feature of the target domain image sample; inputting the matching feature of the source domain image sample into a discriminator network to calculate a discrimination result of the matching feature of the source domain image sample, and inputting the matching feature of the target domain image sample into the discriminator network to calculate a discrimination result of the matching feature of the target domain image sample; calculating a first loss value based on the discrimination result of the matching feature of the target domain image sample, and adjusting parameters of the matching feature extraction network based on the first loss value; calculating a second loss value based on the discrimination result of the matching feature of the source domain image sample and the discrimination result of the matching feature of the target domain image sample, and adjusting parameters of the discriminator network based on the second loss value; in response to a determination that the first loss value and the second loss value meet a preset condition, ending the training process; in response to a determination that the first loss value and the second loss value do not meet the preset condition, obtaining a next source domain image sample and a next target domain image sample and repeating the foregoing steps.

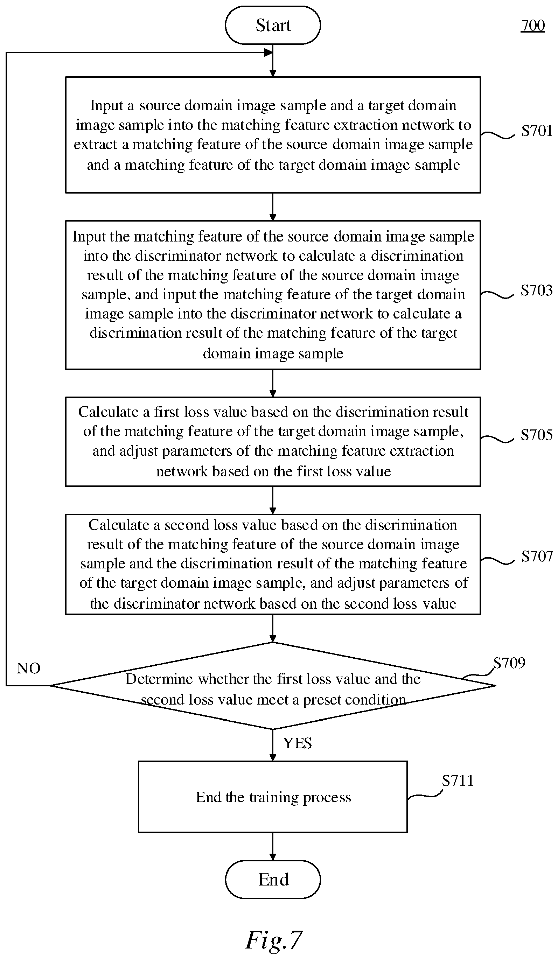

Fig. 7 is a flowchart of a process 700 of training a matching feature extraction network according to an embodiment of the present disclosure.

In step S701, a source domain image sample and a target domain image sample are input into the matching feature extraction network to extract a matching feature of the source domain image sample and a matching feature of the target domain image sample.

In step S703, the matching feature of the source domain image sample is input into the discriminator network to calculate a discrimination result of the matching feature of the source domain image sample, and the matching feature of the target domain image sample is input into the discriminator network to calculate a discrimination result of the matching feature of the target domain image sample.

In step S705, a first loss value is calculated based on the discrimination result of the matching feature of the target domain image sample, and parameters of the matching feature extraction network are adjusted based on the first loss value.

According to some embodiments, the calculating a first loss value based on the discrimination result of the matching feature of the target domain image sample comprises: calculating the first loss value according to a formula

$$L_1 = -\frac{1}{N}\sum_{i=1}^{N}\sum_{j=1}^{N_p} \log\left(O_t^{ij}\right)$$

, wherein $L_1$ is the first loss value, $O_t^{ij}$ is the j-th element of a discrimination result of a matching feature of the i-th target domain image sample, wherein N is the number of images of the target domain image sample, and $N_p$ is the number of elements in each target domain image sample.

In step S707, a second loss value is calculated based on the discrimination result of the matching feature of the source domain image sample and the discrimination result of the matching feature of the target domain image sample, and parameters of the discriminator network are adjusted based on the second loss value.

According to some embodiments, the calculating a second loss value based on the discrimination result of the matching feature of the source domain image sample and the discrimination result of the matching feature of the target domain image sample comprises: calculating the second loss value according to a formula

8

$$L_2 = -\frac{1}{N}\sum_{i=1}^{N}\sum_{j=1}^{N_p}\log(O_s^{ij}) - \frac{1}{N}\sum_{i=1}^{N}\sum_{j=1}^{N_p}\log(1-O_t^{ij})$$

, wherein $L_2$ is the second loss value, $O_t^{ij}$ is the j-th element of a discrimination result of a matching feature of the i-th target domain image sample, $O_s^{ij}$ is the j-th element of a discrimination result of a matching feature of the i-th source domain image sample, wherein N is the number of images of the source domain image sample or the target domain image sample, and $N_p$ is the number of elements in each source domain image sample or each target domain image sample.

In step S709, whether the first loss value and the second loss value meet a preset condition is determined, wherein in response to determining that the first loss value and the second loss value meet the preset condition, step S711 is performed, and in response to determining that the first loss value or the second loss value does not meet the preset condition, step S701 is performed.

In step S711, the training process is ended.

Because the matching feature extraction network is to make it impossible for a discriminator to determine whether an input comes from a source domain or a target domain, and the discriminator network is to determine as much as possible whether an input comes from the source domain or the target domain, a distance between the extracted matching feature of the source domain image and the extracted matching feature of the target domain image can be gradually shortened through adversarial learning between the matching feature extraction network and the discriminator network, such that the data that may be used for training of object pose estimation can be mined from the simulated data.

According to some embodiments, the preset condition comprises the following: both the first loss value and the second loss value converge.

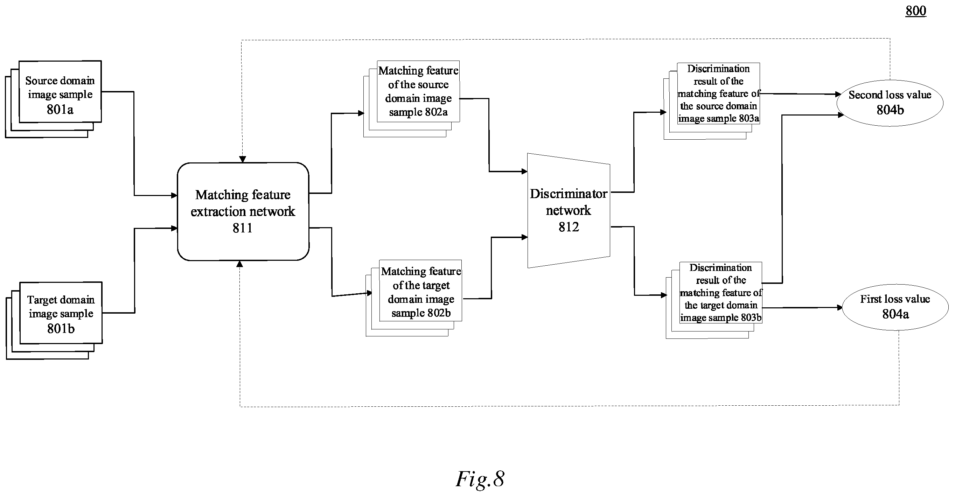

Fig. 8 is a schematic diagram of a process 800 of training a matching feature extraction network according to an embodiment of the present disclosure.

As described with reference to step S701 in Fig. 7, a source domain image sample 801a and a target domain image sample 801b are input into a matching feature extraction network 811 to extract a matching feature of the source domain image sample 802a and a matching feature of the target domain image sample 802b.

As described with reference to step S703 in Fig. 7, the matching feature of the source domain image sample 802a is input into a discriminator network 812 to calculate a discrimination result of the matching feature of the source domain image sample 803a, and the matching feature of the target domain image sample 802b is input into the discriminator network 812 to calculate a discrimination result of the matching feature of the target domain image sample 803b.

As described with reference to step S705 in Fig. 7, a first loss value 804a is calculated based on the discrimination result of the matching feature of the target domain image sample 803b, and parameters of the matching feature extraction network 811 is adjusted based on the first loss value 804a.

As described with reference to step S707 in Fig. 7, a second loss value 804b is calculated based on the discrimination result of the matching feature of the source domain image sample 803a and the discrimination result of the matching feature of the target domain image sample 803b, and parameters of the discriminator network 812 is adjusted based on the second loss value 804b.

As described with reference to step S709 in Fig. 7, training the matching feature extraction network 811 and the discriminator network 812 is ended in response to a determination that the first loss value 804a and the second loss value 804b meet a preset condition.

According to some embodiments, there is provided a training method for a neural network, wherein the neural network comprises a matching feature extraction network and a discriminator network, and the training method comprises the following steps: inputting a source domain image sample and a target domain image sample into the matching feature extraction network to extract a matching feature of the source domain image sample and a matching feature of the target domain image sample, wherein the matching feature of the source domain image sample and the matching feature of target domain image sample are mutually matching features in the source domain image sample and the target domain image sample, the source domain image is a simulated image generated through rendering based on predetermined object pose parameters, and the target domain image is a real image that is actually shot and applicable to learning of object pose estimation; inputting the matching feature of the source domain image sample into the discriminator network to calculate a discrimination result of the matching feature of the source domain image sample, and inputting the matching feature of the target domain image sample into the discriminator network to calculate a discrimination result of the matching feature of the target domain image sample; calculating a first loss value based on the discrimination result of the matching feature of the target domain image sample, and adjusting parameters of the matching feature extraction network based on the first loss value; calculating a second loss value based on the discrimination result of the matching feature of the source domain image sample and the discrimination result of the matching feature of the target domain image sample, and adjusting parameters of the discriminator network based on the second loss value; in response to a determination that the first loss value and the second loss value meet a preset condition, ending the training method; in response to a determination that the first loss value and the second loss value do not meet the preset condition, obtaining a next source domain image sample and a next target domain image sample, and repeating the foregoing steps.

According to some embodiments, the matching feature extraction network comprises a source domain feature extraction network, a target domain feature extraction network, and a matching feature recognition network, and the inputting the source domain image sample and the target domain image sample into the matching feature extraction network to extract the matching feature of the source domain image sample and the matching feature of the target domain image sample comprises: inputting the source domain image sample into the source domain feature extraction network to extract a source domain image sample feature; inputting the target domain image sample into the target domain feature extraction network to extract a target domain image sample feature; inputting the source domain image sample feature and the target domain image sample feature into the matching feature recognition network to extract the matching feature of the source domain image sample and the matching feature of the target domain image sample, wherein the source domain feature extraction network and the target domain feature extraction network are the same in both structure and parameters, and the source domain image sample and the target domain image sample are the same in number of images. According to some embodiments, the matching feature recognition network comprises a similarity evaluation network, and the inputting the source domain image sample feature and the target domain image sample feature into the matching feature recognition network to extract the matching feature of the source domain image sample and the matching feature of the target domain image sample comprises: performing channel stacking on the source domain image sample feature and the target domain image sample feature to obtain a comprehensive image feature; inputting the comprehensive image feature into the similarity evaluation network to obtain matching feature distribution in the source domain image sample and the target domain image sample; performing channel splitting on the matching feature distribution in the source domain image sample and the target domain image sample to obtain matching feature distribution of the source domain image sample and matching feature distribution of the target domain image sample; multiplying the matching feature distribution of the source domain image sample feature by the source domain image sample feature to obtain the matching feature of the source domain image sample; multiplying the matching feature distribution of the target domain image sample feature by the target domain image sample feature to obtain the matching feature of the target domain image sample.

According to some embodiments, the calculating the first loss value based on the discrimination result of the matching feature of the target domain image sample comprises: calculating the first loss value according to a formula

$$L_1 = -\frac{1}{N}\sum_{i=1}^{N}\sum_{j=1}^{N_p}\log\left(O_t^{ij}\right)$$

, wherein $L_1$ is the first loss value, $O^{ij}_t$ is a j-th element of a discrimination result of a matching feature of an i-th target domain image sample, wherein N is the number of images of the target domain image sample, and $N_p$ is the number of elements in each target domain image sample.

According to some embodiments, the calculating a second loss value based on the discrimination result of the matching feature of the source domain image sample and the discrimination result of the matching feature of the target domain image sample comprises: calculating the second loss value according to a formula

$$L_2 = -\frac{1}{N}\sum_{i=1}^{N}\sum_{j=1}^{N_p}\log\left(O_s^{ij}\right) - \frac{1}{N}\sum_{i=1}^{N}\sum_{j=1}^{N_p}\log\left(1 - O_t^{ij}\right)$$

, wherein $L_2$ is the second loss value, $O^{ij}_t$ is a j-th element of a discrimination result of a matching feature of an i-th target domain image sample, $O^{ij}_s$ is a j-th element of a discrimination result of a matching feature of an i-th source domain image sample, wherein N is the number of images of the source domain image sample or the target domain image sample, and $N_p$ is the number of elements in each source domain image sample or each target domain image sample.

According to some embodiments, the preset condition comprises the following: both the first loss value and the second loss value converge.

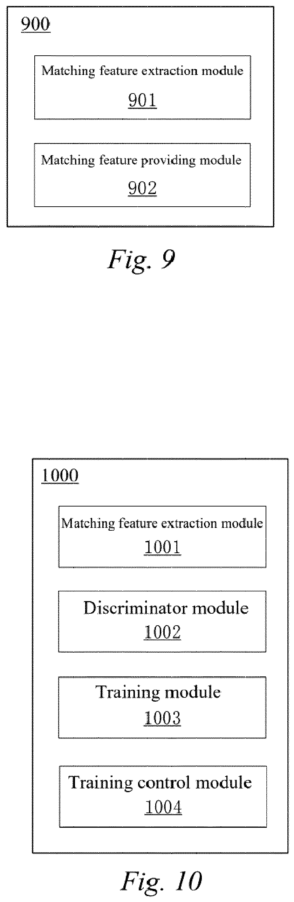

Fig. 9 is a structural block diagram of an image processing apparatus 900 according to an embodiment of the present disclosure.

According to some embodiments, the image processing apparatus 900 comprises: a matching feature extraction module 901 and a matching feature providing module 902. The matching feature extraction module 901 is configured to: input a source domain image and a target domain image into a matching feature extraction network to extract a matching feature of the source domain image and a matching feature of the target domain image, wherein the matching feature of the source domain image and the matching feature of target domain image are mutually matching features in the source domain image and the target domain image, the source domain image is a simulated image generated through rendering based on predetermined object pose parameters, and the target domain image is a real image that is actually shot and applicable to learning of object pose estimation. The matching feature providing module 902 is configured to: provide the matching feature of the source domain image for training of the object pose estimation.

Fig. 10 is a structural block diagram of a training apparatus 1000 for a neural network according to an embodiment of the present disclosure, wherein the neural network comprises a matching feature extraction network and a discriminator network.

According to some embodiments, the training apparatus 1000 comprises: a matching feature extraction module 1001, a discriminator module 1002, a training module 1003 and a training control module 1004.

The matching feature extraction module 1001 is configured to: input a source domain image sample and a target domain image sample into the matching feature extraction network to extract a matching feature of the source domain image sample and a matching feature of the target domain image sample, wherein the matching feature of the source domain image sample and the matching feature of target domain image sample are mutually matching features in the source domain image sample and the target domain image sample, a source domain image is a simulated image generated through rendering based on predetermined object pose parameters, and a target domain image is a real image that is actually shot and applicable to learning of object pose estimation.

The discriminator module 1002 is configured to: input the matching feature of the source domain image sample into the discriminator network to calculate a discrimination result of the matching feature of the source domain image sample, and input the matching feature of the target domain image sample into the discriminator network to calculate a discrimination result of the matching feature of the target domain image sample.

The training module 1003 is configured to: calculate a first loss value based on the discrimination result of the matching feature of the target domain image sample, and adjust parameters of the matching feature extraction network based on the first loss value; calculate a second loss value based on the discrimination result of the matching feature of the source domain image sample and the discrimination result of the matching feature of the target domain image sample, and adjust parameters of the discriminator network based on the second loss value.

The training control module 1004 is configured to: end training in response to a determination that the first loss value and the second loss value meet a preset condition; and provide a next source domain image sample and a next target domain image sample to the matching feature extraction module 1001 for further training in response to a determination that the first loss value and the second loss value do not meet the preset condition.

It should be understood that the modules of the apparatus 1000 shown in Fig. 10 may correspond to the steps in the method 700 described with reference to Fig. 7. Therefore, the operation, features, and advantages described above for the method 700 are equally applicable to the apparatus 1000 and the modules included therein. For the sake of brevity, some operations, features, and advantages are not described herein again.

Although specific functions are discussed above with reference to specific modules, it should be noted that the functions of the various modules discussed herein may be divided into a plurality of modules, and/or at least some functions of a plurality of modules may be combined into a single module. The specific module performing actions discussed herein comprises the specific module performing the action itself, or alternatively, the specific module invoking or otherwise accessing another component or module that performs the action (or performs the action together with the specific module). Therefore, the specific module performing the action may comprise the specific module performing the action itself and/or another module that the specific module invokes or otherwise accesses to perform the action.

It should be further understood that, various technologies may be described herein in the general context of software and hardware elements or program modules. The various modules described above with respect to Fig. 10 may be implemented in hardware or in hardware in combination with software and/or firmware. For example, these modules may be implemented as computer program code/instructions configured to be executed in one or more processors and stored in a computer-readable storage medium. Alternatively, these modules may be implemented as hardware logic/circuitry.

According to an embodiment of the present disclosure, the present disclosure further provides an electronic device, a readable storage medium, and a computer program product.

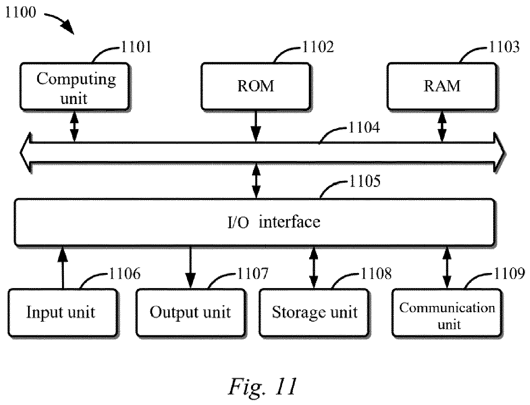

Referring to Fig. 11, a structural block diagram of an electronic device 1100 that can serve as a server or a client of the present disclosure is now described, which is an example of a hardware device that can be applied to various aspects of the present disclosure. The electronic device is intended to represent various forms of digital electronic computer devices, such as a laptop computer, a desktop computer, a workstation, a personal digital assistant, a server, a blade server, a mainframe computer, and other suitable computers. The electronic device may further represent various forms of mobile apparatuses, such as a personal digital assistant, a cellular phone, a smartphone, a wearable device, and other similar computing apparatuses. The components, their connections and relationships, and their functions shown herein are merely examples, and are not intended to limit the implementation of the present disclosure described and/or required herein.

As shown in Fig. 11, the device 1100 comprises a computing unit 1101, which may perform various appropriate actions and processing according to a computer program stored in a read-only memory (ROM) 1102 or a computer program loaded from a storage unit 1108 to a random access memory (RAM) 1103. The RAM 1103 may further store various programs and data required for the operation of the device 1100. The computing unit 1101, the ROM 1102, and the RAM 1103 are connected to each other through a bus 1104. An input/output (I/O) interface 1105 is also connected to the bus 1104.

A plurality of components in the device 1100 are connected to the I/O interface 1105, including: an input unit 1106, an output unit 1107, the storage unit 1108, and a communication unit 1109. The input unit 1106 may be any type of device capable of entering information to the device 1100. The input unit 1106 can receive entered digit or character information, and generate a key signal input related to user settings and/or function control of the electronic device, and may include, but is not limited to, a mouse, a keyboard, a touchscreen, a trackpad, a trackball, a joystick, a microphone, and/or a remote controller. The output unit 1107 may be any type of device capable of presenting information, and may include, but is not limited to, a display, a speaker, a video/audio output terminal, a vibrator, and/or a printer. The storage unit 1108 may include, but is not limited to, a magnetic disk and an optical disc. The communication unit 1109 allows the device 1100 to exchange information/data with other devices via a computer network such as the Internet and/or various telecommunications networks, and may include, but is not limited to, a modem, a network interface card, an infrared communication device, a wireless communication transceiver and/or a chipset, for example, a Bluetooth™ device, a 1302.11 device, a Wi-Fi device, a WiMax device, a cellular communication device and/or the like.

The computing unit 1101 may be various general-purpose and/or special-purpose processing components with processing and computing capabilities. Some examples of the computing unit 1101 include, but are not limited to, a central processing unit (CPU), a graphics processing unit (GPU), various dedicated artificial intelligence (AI) computing chips, various computing units that run machine learning model algorithms, a digital signal processor (DSP), and any appropriate processor, controller, microcontroller, etc. The computing unit 1101 performs the various methods and processing described above, for example, the methods 200 and 700 or variants thereof. For example, in some embodiments, the methods 200 and 700 may be implemented as a computer software program, which is tangibly contained in a machine-readable medium, such as the storage unit 1108. In some embodiments, a part or all of the computer program may be loaded and/or installed onto the device 1100 via the ROM 1102 and/or the communication unit 1109. When the computer program is loaded into the RAM 1103 and executed by the computing unit 1101, one or more steps of the methods 200 and 700 or variants thereof described above may be performed. Alternatively, in other embodiments, the computing unit 1101 may be configured, by any other suitable means (for example, by means of firmware), to perform the methods 200 and 700.

Various implementations of the systems and technologies described herein above may be implemented in a digital electronic circuit system, an integrated circuit system, a field programmable gate array (FPGA), an application-specific integrated circuit (ASIC), an application-specific standard product (ASSP), a system-on-chip (SOC) system, a complex programmable logical device (CPLD), computer hardware, firmware, software, and/or a combination thereof. These various implementations may comprise: the systems and technologies are implemented in one or more computer programs, wherein the one or more computer programs may be executed and/or interpreted on a programmable system comprising at least one programmable processor. The programmable processor may be a dedicated or general-purpose programmable processor that can receive data and instructions from a storage system, at least one input apparatus, and at least one output apparatus, and transmit data and instructions to the storage system, the at least one input apparatus, and the at least one output apparatus.

Program code for implementing the method of the present disclosure can be written in any combination of one or more programming languages. The program code may be provided to a processor or controller of a general-purpose computer, a special-purpose computer, or other programmable data processing devices, such that when the program code is executed by the processor or controller, the functions/operations specified in the flowcharts and/or block diagrams are implemented. The program code may be completely executed on a machine, or partially executed on a machine, or may be, as an independent software package, partially executed on a machine and partially executed on a remote machine, or completely executed on a remote machine or server.

In the context of the present disclosure, the machine-readable medium may be a tangible medium, which may contain or store a program for use by an instruction execution system, apparatus, or device, or for use in combination with the instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination thereof. More specific examples of the machine-readable storage medium may include an electrical connection based on one or more wires, a portable computer disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination thereof.

In order to provide interaction with a user, the systems and technologies described herein can be implemented on a computer which has: a display apparatus (for example, a cathode-ray tube (CRT) or a liquid crystal display (LCD) monitor) configured to display information to the user; and a keyboard and pointing apparatus (for example, a mouse or a trackball) through which the user can provide an input to the computer. Other types of apparatuses can also be used to provide interaction with the user; for example, feedback provided to the user can be any form of sensory feedback (for example, visual feedback, auditory feedback, or tactile feedback), and an input from the user can be received in any form (including an acoustic input, voice input, or tactile input).

The systems and technologies described herein can be implemented in a computing system (for example, as a data server) comprising a backend component, or a computing system (for example, an application server) comprising a middleware component, or a computing system (for example, a user computer with a graphical user interface or a web browser through which the user can interact with the implementation of the systems and technologies described herein) comprising a frontend component, or a computing system comprising any combination of the backend component, the middleware component, or the frontend component. The components of the system can be connected to each other by means of digital data communication (for example, a communications network) in any form or medium. Examples of the communications network comprise: a local area network (LAN), a wide area network (WAN), and the Internet.

A computer system may comprise a client and a server. The client and the server are generally far away from each other and usually interact through a communications network. A relationship between the client and the server is generated by computer programs running on respective computers and having a client-server relationship with each other.

It should be understood that steps may be reordered, added, or deleted based on the various forms of procedures shown above. For example, the steps recorded in the present disclosure may be performed in parallel, in order, or in a different order, provided that the desired result of the technical solutions disclosed in the present disclosure can be achieved, which is not limited herein.

Although the embodiments or examples of the present disclosure have been described with reference to the accompanying drawings, it should be appreciated that the methods, systems and devices described above are merely exemplary embodiments or examples, and the scope of the present invention is not limited by the embodiments or examples, but only defined by the appended authorized claims and equivalent scopes thereof. Various elements in the embodiments or examples may be omitted or substituted by equivalent elements thereof. Moreover, the steps may be performed in an order different from that described in the present disclosure. Further, various elements in the embodiments or examples may be combined in various ways. It is important that, as the technology evolves, many elements described herein may be replaced with equivalent elements that appear after the present disclosure.

**Claims**

1. A computer-implemented image processing method, comprising:

   inputting (S201) a source domain image and a target domain image into a matching feature extraction network to extract a matching feature of the source domain image and a matching feature of the target domain image, wherein the matching feature of the source domain image and the matching feature of target domain image are mutually matching features in the source domain image and the target domain image, the source domain image is a simulated image generated through rendering based on predetermined object pose parameters, and the target domain image is a real image that is actually shot and applicable to learning of object pose estimation; and
   providing (S203) the matching feature of the source domain image for training of the object pose estimation.

2. The image processing method according to claim 1, wherein the matching feature extraction network comprises a source domain feature extraction network, a target domain feature extraction network, and a matching feature recognition network, and the inputting (S201) the source domain image and the target domain image into the matching feature extraction network to extract the matching feature of the source domain image and the matching feature of the target domain image comprises:

   inputting (S301) the source domain image into the source domain feature extraction network to extract a source domain image feature;
   inputting (S303) the target domain image into the target domain feature extraction network to extract a target domain image feature; and
   inputting (S305) the source domain image feature and the target domain image feature into the matching feature recognition network to extract the matching feature of the source domain image and the matching feature of the target domain image,
   wherein the source domain feature extraction network and the target domain feature extraction network are the same in both structure and parameters, and the source domain image and the target domain image are the same in number of images.

3. The image processing method according to claim 2, wherein the matching feature recognition network comprises a similarity evaluation network, and the inputting (S305) the source domain image feature and the target domain image feature into the matching feature recognition network to extract the matching feature of the source domain image and the matching feature of the target domain image comprises:

performing channel stacking (S501) on the source domain image feature and the target domain image feature to obtain a comprehensive image feature;

inputting (S503) the comprehensive image feature into the similarity evaluation network to obtain a matching feature distribution of the source domain image and the target domain image;

performing channel splitting (S505) on the matching feature distribution of the source domain image and the target domain image to obtain a matching feature distribution of the source domain image and a matching feature distribution of the target domain image;

multiplying (S507) the matching feature distribution of the source domain image by the source domain image feature to obtain the matching feature of the source domain image; and

multiplying (S509) the matching feature distribution of the target domain image by the target domain image feature to obtain the matching feature of the target domain image.

4.  The image processing method according to claim 3, wherein the matching feature extraction network is obtained through a training process comprising steps of:

inputting (S701) a source domain image sample and a target domain image sample into the matching feature extraction network to extract a matching feature of the source domain image sample and a matching feature of the target domain image sample;

inputting (S703) the matching feature of the source domain image sample into a discriminator network to calculate a discrimination result of the matching feature of the source domain image sample, and inputting the matching feature of the target domain image sample into the discriminator network to calculate a discrimination result of the matching feature of the target domain image sample;

calculating (S705) a first loss value based on the discrimination result of the matching feature of the target domain image sample, and adjusting parameters of the matching feature extraction network based on the first loss value;

calculating (S707) a second loss value based on the discrimination result of the matching feature of the source domain image sample and the discrimination result of the matching feature of the target domain image sample, and adjusting parameters of the discriminator network based on the second loss value;

in response to a determination that the first loss value and the second loss value meet a preset condition, ending (S711) the training process; and

in response to a determination that the first loss value and the second loss value do not meet the preset condition, obtaining a next source domain image sample and a next target domain image sample and repeating the steps.

5.  The image processing method according to claim 4, wherein the calculating the first loss value based on the discrimination result of the matching feature of the target domain image sample comprises:

calculating the first loss value according to a formula $L_1 = -\frac{1}{N}\sum_{i=1}^{N}\sum_{j=1}^{N_p} \log\left(O_t^{ij}\right)$,

wherein $L_1$ is the first loss value, $O_t^{ij}$ is a j-th element of a discrimination result of a matching feature of an i-th target domain image sample, wherein N is the number of images of the target domain image sample, and $N_p$ is the number of elements in each target domain image sample.

6.  The image processing method according to claim 4, wherein the calculating the second loss value based on the discrimination result of the matching feature of the source domain image sample and the discrimination result of the matching feature of the target domain image sample comprises:

calculating the second loss value according to a formula

$$L_2 = -\frac{1}{N}\sum_{i=1}^{N}\sum_{j=1}^{N_p} \log\left(O_s^{ij}\right) - \frac{1}{N}\sum_{i=1}^{N}\sum_{j=1}^{N_p} \log\left(1 - O_t^{ij}\right),$$

wherein $L_2$ is the second loss value, $O_t^{ij}$ is a j-th element of a discrimination result of a matching feature of an i-th target domain image sample, $O_s^{ij}$ is a j-th element of a discrimination result of a matching feature of an i-th source domain image sample, wherein N is the number of images of the source domain image sample or the target domain image sample, and $N_p$ is the number of elements in each source domain image sample or each target domain image sample.

7. The image processing method according to any one of claims 4 to 6, wherein the preset condition comprises: both the first loss value and the second loss value converge.

8. A computer-implemented training method for a neural network, wherein the neural network comprises a matching feature extraction network and a discriminator network, the training method comprising steps of:

   inputting (S701) a source domain image sample and a target domain image sample into the matching feature extraction network to extract a matching feature of the source domain image sample and a matching feature of the target domain image sample, wherein the matching feature of the source domain image sample and the matching feature of target domain image sample are mutually matching features in the source domain image sample and the target domain image sample, the source domain image sample is a simulated image generated through rendering based on predetermined object pose parameters, and the target domain image sample is a real image that is actually shot and applicable to learning of object pose estimation;
   inputting (S703) the matching feature of the source domain image sample into the discriminator network to calculate a discrimination result of the matching feature of the source domain image sample, and inputting the matching feature of the target domain image sample into the discriminator network to calculate a discrimination result of the matching feature of the target domain image sample;
   calculating (S705) a first loss value based on the discrimination result of the matching feature of the target domain image sample, and adjusting parameters of the matching feature extraction network based on the first loss value;
   calculating (S707) a second loss value based on the discrimination result of the matching feature of the source domain image sample and the discrimination result of the matching feature of the target domain image sample, and adjusting parameters of the discriminator network based on the second loss value;
   in response to a determination that the first loss value and the second loss value meet a preset condition, ending the training method; and
   in response to a determination that the first loss value and the second loss value do not meet the preset condition, obtaining a next source domain image sample and a next target domain image sample, and repeating the steps.

9. The training method according to claim 8, wherein the matching feature extraction network comprises a source domain feature extraction network, a target domain feature extraction network, and a matching feature recognition network, and the inputting the source domain image sample and the target domain image sample into the matching feature extraction network to extract the matching feature of the source domain image sample and the matching feature of the target domain image sample comprises:

   inputting the source domain image sample into the source domain feature extraction network to extract a source domain image sample feature;
   inputting the target domain image sample into the target domain feature extraction network to extract a target domain image sample feature; and
   inputting the source domain image sample feature and the target domain image sample feature into the matching feature recognition network, to extract the matching feature of the source domain image sample and the matching feature of the target domain image sample,
   wherein the source domain feature extraction network and the target domain feature extraction network are the same in both structure and parameters, and the source domain image sample and the target domain image sample are the same in number of images.

10. The training method according to claim 9, wherein the matching feature recognition network comprises a similarity evaluation network, and the inputting the source domain image sample feature and the target domain image sample feature into the matching feature recognition network to extract the matching feature of the source domain image sample and the matching feature of the target domain image sample comprises:

   performing channel stacking on the source domain image sample feature and the target domain image sample feature to obtain a comprehensive image feature;
   inputting the comprehensive image feature into the similarity evaluation network to obtain a matching feature distribution in the source domain image sample and the target domain image sample;
   performing channel splitting on the matching feature distribution in the source domain image sample and the target domain image sample to obtain a matching feature distribution of the source domain image sample and a matching feature distribution of the target domain image sample;
   multiplying the matching feature distribution of the source domain image sample by the source domain image sample feature to obtain the matching feature of the source domain image sample; and
multiplying the matching feature distribution of the target domain image sample by the target domain image sample feature to obtain the matching feature of the target domain image sample.

11. The training method according to any one of claims 8 to 10, wherein the calculating the first loss value based on the discrimination result of the matching feature of the target domain image sample comprises:

calculating the first loss value according to a formula $L_1 = -\frac{1}{N}\sum_{i=1}^{N}\sum_{j=1}^{N_p}\log(O_t^{ij})$ ,

wherein $L_1$ is the first loss value, $O_t^{ij}$ is a j-th element of a discrimination result of a matching feature of an i-th target domain image sample, wherein N is the number of images of the target domain image sample, and $N_p$ is the number of elements in each target domain image sample.

12. The training method according to any one of claims 8 to 10, wherein the calculating a second loss value based on the discrimination result of the matching feature of the source domain image sample and the discrimination result of the matching feature of the target domain image sample comprises:

calculating the second loss value according to a formula

$$L_2 = -\frac{1}{N}\sum_{i=1}^{N}\sum_{j=1}^{N_p}\log(O_s^{ij}) - \frac{1}{N}\sum_{i=1}^{N}\sum_{j=1}^{N_p}\log(1 - O_t^{ij}),$$

wherein $L_2$ is the second loss value, $O_t^{ij}$ is a j-th element of a discrimination result of a matching feature of an i-th target domain image sample, $O_s^{ij}$ is a j-th element of a discrimination result of a matching feature of an i-th source domain image sample, wherein N is the number of images of the source domain image sample or the target domain image sample, and $N_p$ is the number of elements in each source domain image sample or each target domain image sample.

13. The training method according to any one of claims 8 to 10, wherein the preset condition comprises: both the first loss value and the second loss value converge.

14. An electronic device, comprising:

at least one processor; and
a memory communicatively connected to the at least one processor, wherein
the memory stores instructions executable by the at least one processor, and the instructions, when executed by the at least one processor, enable the at least one processor to perform the method according to any one of claims 1 to 13.

15. A computer-readable storage medium storing computer instructions, wherein the computer instructions are configured to cause a computer to perform the method according to any one of claims 1 to 13.

**100**

*Fig.1*

**200**

Start

Input a source domain image and a target domain image into a matching feature extraction network to extract a matching feature of the source domain image and a matching feature of the target domain image — S201

Provide the matching feature of the source domain image for training of the object pose estimation — S203

End

*Fig.2*

Start      <u>S201</u>

Input the source domain image into the source domain feature extraction network to extract a source domain image feature    S301

Input the target domain image into the target domain feature extraction network to extract a target domain image feature    S303

Input the source domain image feature and the target domain image feature into the matching feature recognition network to extract the matching feature of the source domain image and the matching feature of the target domain image    S305

End

*Fig.3*

400

Source domain image
401a

Source domain feature extraction network
411

Source domain image feature
402a

Matching feature of the source domain image
403a

Matching feature recognition network
413

Target domain image
401b

Target domain feature extraction network
412

Target domain image feature
402b

Matching feature of the target domain image
403b

*Fig.4*

S305

```
                    ┌─────────────┐
                    │    Start    │
                    └──────┬──────┘
                           │
                           ▼
        ┌──────────────────────────────────────┐
        │ Perform channel stacking on the source│
        │ domain image feature and the target   │ ⌇  S501
        │ domain image feature to obtain a      │
        │ comprehensive image feature           │
        └──────────────────┬───────────────────┘
                           │
                           ▼
        ┌──────────────────────────────────────┐
        │ Input the comprehensive image feature │
        │ into the similarity evaluation network│ ⌇  S503
        │ to obtain matching feature distribution│
        │ in the source domain image and the     │
        │ target domain image                    │
        └──────────────────┬───────────────────┘
                           │
                           ▼
        ┌──────────────────────────────────────┐
        │ Perform channel splitting on the      │
        │ matching feature distribution in the  │
        │ source domain image and the target    │ ⌇  S505
        │ domain image to obtain matching feature│
        │ distribution of the source domain      │
        │ image and matching feature distribution│
        │ of the target domain image             │
        └──────────────────┬───────────────────┘
                           │
                           ▼
        ┌──────────────────────────────────────┐
        │ Multiply the matching feature         │
        │ distribution of the source domain     │ ⌇  S507
        │ image by the source domain image      │
        │ feature to obtain the matching        │
        │ feature of the source domain image    │
        └──────────────────┬───────────────────┘
                           │
                           ▼
        ┌──────────────────────────────────────┐
        │ Multiply the matching feature         │
        │ distribution of the target domain     │ ⌇  S509
        │ image by the target domain image      │
        │ feature to obtain the matching feature│
        │ of the target domain image            │
        └──────────────────┬───────────────────┘
                           │
                           ▼
                    ┌─────────────┐
                    │     End     │
                    └─────────────┘
```

*Fig.5*

Matching feature of the source domain network 403a

Matching feature of the target domain image 403b

413

Dot product module 614

Dot product module 615

Matching feature distribution of the source domain image 404a

Matching feature distribution of the target domain image 404b

Channel splitting module 613

S

Similarity evaluation network 612

Channel stacking module 611

C

Source domain image feature 402a

Target domain image feature 402b

*Fig.6*

Start

700

Input a source domain image sample and a target domain image sample into the matching feature extraction network to extract a matching feature of the source domain image sample and a matching feature of the target domain image sample

S701

Input the matching feature of the source domain image sample into the discriminator network to calculate a discrimination result of the matching feature of the source domain image sample, and input the matching feature of the target domain image sample into the discriminator network to calculate a discrimination result of the matching feature of the target domain image sample

S703

Calculate a first loss value based on the discrimination result of the matching feature of the target domain image sample, and adjust parameters of the matching feature extraction network based on the first loss value

S705

Calculate a second loss value based on the discrimination result of the matching feature of the source domain image sample and the discrimination result of the matching feature of the target domain image sample, and adjust parameters of the discriminator network based on the second loss value

S707

NO

Determine whether the first loss value and the second loss value meet a preset condition

S709

YES

End the training process

S711

End

*Fig.7*

*Fig.8*

900

Matching feature extraction module
901

Matching feature providing module
902

*Fig. 9*

1000

Matching feature extraction module
1001

Discriminator module
1002

Training module
1003

Training control module
1004

*Fig. 10*

*Fig. 11*